# EUROPÄISCHE PATENTSCHRIFT

(11) **EP 3 620 044 B1**
(45) Veröffentlichungstag und Bekanntmachung des Hinweises auf die Patenterteilung: **10.01.2024**
(21) Anmeldenummer: 19184864.7
(22) Anmeldetag: 08.07.2019
(51) Int. Cl.: A01F 15/08, A01B 67/00

(54) **VERFAHREN ZUM BETRIEB EINES LANDWIRTSCHAFTLICHEN ARBEITSVERBUNDS SOWIE LANDWIRTSCHAFTLICHER ARBEITSVERBUND**
AGRICULTURAL WORKING COMPOSITE AND METHOD FOR OPERATING AN AGRICULTURAL WORKING COMPOSITE
PROCÉDÉ DE FONCTIONNEMENT D'UN RACCORDEMENT DE TRAVAIL AGRICOLE AINSI QUE RACCORDEMENT DE TRAVAIL AGRICOLE

(30) Priorität: 04.09.2018 DE 102018121497
(43) Veröffentlichungstag der Anmeldung: 11.03.2020
(73) Patentinhaber: Usines CLAAS France S.A.S, 57140 St. Rémy / Woippy (FR)
(72) Erfinder: Rongvaux, Laurent, 54800 Tronville (FR)
(74) Vertreter: CLAAS Gruppe

(56) Entgegenhaltungen:
- EP-A1- 3 081 793
- EP-A1- 3 308 630
- EP-A1- 3 308 635
- US-A1- 2017 028 988

## Beschreibung

Die vorliegende Anmeldung betrifft ein Verfahren zum Betrieb eines landwirtschaftlichen Arbeitsverbundes gemäß dem Oberbegriff von Anspruch 1. Weiterhin betrifft die vorliegende Anmeldung einen landwirtschaftlichen Arbeitsverbund gemäß dem Oberbegriff von Anspruch 10.

Der landwirtschaftliche Arbeitsverbund umfasst eine landwirtschaftliche Arbeitsmaschine sowie eine damit verbundene landwirtschaftliche Quaderballenpresse. Die Arbeitsmaschine kann insbesondere von einem Traktor gebildet sein. Die "Verbindung" zwischen der Arbeitsmaschine und der Quaderballenpresse besteht zum einen in einer mechanischen Kopplung, die es erlaubt, dass die Arbeitsmaschine die Quaderballenpresse zieht bzw. schleppt. Weiterhin umfasst die Verbindung die Möglichkeit zur Übergabe bzw. Übernahme eines Antriebsmoments, wobei die Quaderballenpresse mit einem Nebenabtrieb der Arbeitsmaschine zusammenwirkt. Letzterer kann insbesondere in Form einer Zapfwelle ausgebildet sein, die an einer Rückseite der Arbeitsmaschine angeordnet ist. Mittels einer Drehmomentkupplung ist ein an einem solchen Nebenabtrieb zur Verfügung gestelltes Drehmoment übernehmbar, sodass die Quaderballenpresse mittels der Arbeitsmaschine antreibbar ist.

Die Quaderballenpresse als solche ist dazu geeignet, zu pressendes Material, das insbesondere von Pflanzenresten zuvor geernteter Pflanzen gebildet sein kann, zu quaderförmigen Ballen zu pressen. Hierzu wird das Material zunächst von einem Untergrund aufgenommen und zumindest mittelbar einem Hauptkanal eines Hauptverdichters der Quaderballenpresse zugeführt. Der Hauptverdichter ist dazu geeignet, sich oszillierend innerhalb des Hauptkanals hin und her zu bewegen, wobei er sich zwischen einer maximal in dem Hauptkanal zurückgezogenen Aushohlstellung und einer maximal in dem Hauptkanal ausgefahrenen Pressstellung bewegen kann. Das zu pressende Material wird in aller Regel in einem Moment in den Hauptkanal eingebracht, zu dem sich der Hauptverdichter, der typischerweise von einem Verdichterkolben gebildet ist, in seiner Aushohlstellung befindet. Im Zuge seines nächsten Hubes erfasst der Hauptverdichter sodann das neu in den Hauptkanal eingebrachte Material und presst selbiges gegen bereits in dem Hauptkanal zuvor gepresstes Material. Aufgrund seines Bewegungsraumes innerhalb des Hauptkanals wird das Material dabei zumindest bis an eine solche Position befördert, die mit der Pressstellung des Hauptverdichters korrespondiert. Der Hauptkanal ist an dieser Stelle mittels zuvor eingebrachten Materials "versperrt" sodass das neue in den Hauptkanal eingebrachte Material unweigerlich zwischen dem Hauptverdichter und dem bereits in dem Hauptkanal befindlichen Material gepresst und dabei wunschgemäß verdichtet wird.

In dem Moment, in dem der Hauptverdichter sich in seiner Pressstellung befindet, ist nach alldem ein an dem Hauptverdichter anliegender Verdichtungsdruck maximal. Die in Form einer Reaktionskraft auf den Hauptverdichter einwirkende Druckkraft kann dabei derart groß sein, dass eine Überwindung der extremalen Pressstellung problematisch ist. Daher ist es für Quaderballenpressen üblich, dass diese mit einem Schwungrad ausgestattet sind, das eine Drehmomentreserve vorhält. Das Schwungrad ist dabei derart in Drehmoment übertragender Weise mit einem Antriebsstrang des Hauptverdichters gekoppelt, dass in dem Schwungrad gespeicherte Rotationsenergie zusätzlich zu einer aktuell an dem Nebenabtrieb abgegriffenen Abtriebsleistung zur Verfügung steht, um die Überwindung der Pressstellung des Hauptverdichters zuverlässig zu bewerkstelligen. Eine solche ein Schwungrad umfassende Quaderballenpresse ist beispielsweise aus der EP 3 308 635 A1 bekannt, wobei die aus der EP 3 308 635 A1 bekannte Quaderballenpresse in zwei Betriebsmodi, einem Startmodus, in dem der die Bewegung des Verdichterkolbens von einer Bewegung der Kurbelwelle entkoppelt ist, und einem Laufmodus, in dem die Bewegung des Verdichterkolbens mit der Bewegung der Kurbelwelle gekoppelt wird, betrieben werden kann.

Alternativ oder zusätzlich zu der Verwendung eines Schwungrades ist es im Stand der Technik bereits bekannt, die von der Arbeitsmaschine zur Verfügung gestellte Abtriebsleistung zumindest zeitweise während des Betriebs der Quaderballenpresse zu erhöhen. Hierzu wird beispielhaft auf die Europäische Patentanmeldung EP 3 081 793 A1 verwiesen. Diese beschreibt ein System, das über eine "Lastvorhersage" verfügt. Diese Lastvorhersage beinhaltet ein System, das in Abhängigkeit bestimmter Kriterien anstehende Lastspitzen prognostiziert. Diese Prognose eröffnet einer Steuerung die Möglichkeit, eine von einer Arbeitsmaschine zur Verfügung gestellte Abtriebsleistung vorbeugend anzuheben, sodass die prognostizierte Lastspitze zuverlässig überwunden werden kann.

Derartige Systeme haben sich zumindest insoweit als nachteilig herausgestellt, als eine Zurverfügungstellung einer erhöhten Abtriebsleistung seitens der Arbeitsmaschine zumindest nicht immer zuverlässig erfolgt. Dies betrifft insbesondere eine zeitliche Korrelation einer Leistungsspitze der Arbeitsmaschine und einer jeweiligen Lastspitze der Quaderballenpresse. Somit ist es im Stand der Technik im Praxisbetrieb regelmäßig zu beobachten, dass die erhöhte Abtriebsleistung der Arbeitsmaschine erst nach der tatsächlichen Lastspitze an dem Hauptverdichter der Quaderballenpresse zur Verfügung steht und somit effektiv zu spät ist.

Der vorliegenden Anmeldung liegt mithin die Aufgabe zugrunde, ein Verfahren zum Betrieb eines landwirtschaftlichen Arbeitsverbundes zur Verfügung zu stellen, mittels dessen die Pressstellung des Hauptverdichters zuverlässig sowie effizient überwunden werden kann.

Die zugrunde liegende Aufgabe wird erfindungsgemäß mittels eines Verfahrens mit den Merkmalen des Anspruchs 1 gelöst. Vorteilhafte Ausgestaltungen ergeben sich aus den Unteransprüchen 2 bis 9.

Das erfindungsgemäße Verfahren ist dadurch gekennzeichnet, dass zunächst in einem ersten Verfahrensschritt mindestens ein in der Zukunft liegender Verdichtungszeitpunkt bestimmt wird, zu dem sich der Hauptverdichter in seiner Pressstellung befinden wird. Diese Bestimmung des mindestens einen Verdichtungszeitpunkts erfolgt ausgehend von mindestens einem Betriebszeitpunkt des Arbeitsverbundes. Dabei ist eine wiederholte Bestimmung verschiedener Verdichtungszeitpunkte ausgehend von verschiedenen oder einem einzigen Betriebszeitpunkt denkbar. In einem zweiten Verfahrensschritt wird die Abtriebsleistung der Arbeitsmaschine derart auf ein Spitzenniveau erhöht, dass besagtes Spitzenniveau zum Verdichtungszeitpunkt an dem Hauptverdichter anliegt. Die Abtriebsleistung nimmt mit seinem Spitzenniveau vorzugsweise ein lokales Maximum ein. Hierbei ist es insbesondere von Bedeutung, dass das Spitzenniveau der Abtriebsleistung spätestens bei Erreichen des Verdichtungszeitpunkts effektiv an dem Hauptverdichter anliegt, wobei beispielsweise ein gegenüber dem Verdichtungszeitpunkt verfrühtes Anliegen grundsätzlich unschädlich ist.

Das erfindungsgemäße Verfahren hat viele Vorteile. Insbesondere wird sichergestellt, dass die Erhöhung der Abtriebsleistung auf das genannte Spitzenniveau den gewünschten technischen Effekt mit sich bringt, dem Hauptverdichter bei Erreichen von seiner Pressstellung zur Verfügung zu stehen, um den maximalen Verdichtungsdruck überwinden zu können. Die zuverlässige Steigerung der Abtriebsleistung mittels der Arbeitsmaschine hat weiterhin den Vorteil, dass ein an der Quaderballenpresse angeordnetes Schwungrad gegenüber üblichen Schwungrädern im Stand der Technik deutlich kleiner dimensioniert werden kann. Entsprechend wird die Inbetriebnahme der Quaderballenpresse beschleunigt, da eine kleinere Schwungradmasse in Bewegung gesetzt werden muss, bevor der erste Ballen gepresst werden kann. Überdies wird der Verschleiß der einzelnen Maschinenkomponenten reduziert, da die erforderliche Leistung lediglich in Momenten zur Verfügung gestellt wird, in denen sie tatsächlich benötigt wird. Eine übermäßige Belastung außerhalb dieser Momente, das heißt der verschiedenen Verdichtungszeitpunkte, kann mittels des erfindungsgemäßen Verfahrens vermieden werden.

In einer vorteilhaften Ausgestaltung des erfindungsgemäßen Verfahrens wird die Abtriebsleistung der Arbeitsmaschine nach dem Verstreichen eines jeweiligen Verdichtungszeitpunkts auf ein gegenüber dem Spitzenniveau verringert Leistungsniveau reduziert. Insbesondere wird die Abtriebsleistung zyklisch jeweils auf ein Spitzenniveau, vorzugsweise immer das gleiche Spitzenniveau, angehoben und anschließend wieder abgesenkt, wobei die Anhebung auf das Spitzenniveau mindestens zu einem Verdichtungszeitpunkt stattfindet. Besonders interessant ist das Verfahren dann, wenn das Spitzenniveau wiederholt zu jeweiligen Verdichtungszeitpunkten, von denen während des Betriebs einer Quaderballenpresse eine große Vielzahl auftreten können, anliegt, während in zwischen Verdichtungszeitpunkten liegenden Zeiträumen die Abtriebsleistung auf einem gegenüber dem Spitzenniveau verringerten Niveau gehalten werden kann.

Um sicherzustellen, dass zu einem jeweiligen Verdichtungszeitpunkt die Abtriebsleistung auf dem Spitzenniveau liegt, kann es besonders von Vorteil sein, die Abtriebsleistung derart auf das Spitzenniveau zu erhöhen, dass es über einen Spitzenzeitraum hinweg anliegt. Dieser Spitzenzeitraum beginnt vorteilhafterweise vor dem jeweiligen Verdichtungszeitpunkt und endet nach selbigem. Mithin liegt der Verdichtungszeitpunkt innerhalb des Spitzenzeitraums. Während die Bestimmung des Verdichtungszeitpunkts exakt möglich ist, wie nachstehend gesondert erläutert ist, kann es im Zuge der Erhöhung der Abtriebsleistung der Arbeitsmaschine zu steuerungsabhängigen Schwankungen kommen. Insbesondere ist es für den Erfolg der Erfindung von Bedeutung, dass die Erhöhung einer Leistung insbesondere einer Verbrennungskraftmaschine der jeweiligen Arbeitsmaschine rechtzeitig effektiv an dem Hauptverdichter angelangt. Eine gewisse, durch eine Reaktionszeit der Verbrennungskraftmaschine selbst sowie den Antriebsstrang inklusive der Koppelung der Arbeitsmaschine mit der Quaderballenpresse bedingte Verzögerung ist hierbei zu berücksichtigen und nicht in jedem Fall exakt zeitlich zu bestimmen. Die Verwendung eines Spitzenzeitraums, über den hinweg das Spitzenniveau anliegt, stellt mithin sicher, dass im Moment des Verdichtungszeitpunkts in jedem Fall zuverlässig das Spitzenniveau der Abtriebsleistung anliegt.

Weiterhin kann es von Vorteil sein, wenn in Kenntnis des Verdichtungszeitpunkts sowie einer Trägheit eines Anhebens der Abtriebsleistung auf das Spitzenniveau ein Startzeitpunkt bestimmt wird, zu dem mit der Anhebung eines Leistungsniveaus einer Verbrennungskraftmaschine der Arbeitsmaschine begonnen wird. Dieses Vorgehen ist insbesondere dann von Interesse, wenn die Trägheit des Antriebssystems für den Hauptverdichter zumindest soweit bemessbar ist, dass ein Hochfahrzeitraum, der sich von einer initialen Steigerung der Leistung der Verbrennungskraftmaschine der Arbeitsmaschine bis zum Erreichen des Spitzenniveaus der Abtriebsleistung an dem Hauptverdichter erstreckt, abschätzbar ist. Der Startzeitpunkt der initialen Anhebung des Leistungsniveaus der Verbrennungskraftmaschine kann dann ausgehend von dem bekannten Verdichtungszeitpunkt abzüglich dem Hochfahrzeitraum bestimmt werden.

Hinsichtlich der Bestimmung des Verdichtungszeitpunkts kann das Verfahren dann von besonderem Vorteil sein, wenn der Arbeitsmaschine seitens der Quaderballenpresse mindestens eine Information zur Verfügung gestellt wird, mittels derer mindestens ein Verdichtungszeitpunkt bestimmt wird.

Vorteilhafterweise wird eine solche Information mittels mindestens eines Sensors erfasst, der eine Position des Hauptverdichters innerhalb des Hauptkanals erfasst. In Kenntnis der Position des Hauptverdichters sowie der Drehzahl des Nebenabtriebs und eines Übersetzungsverhältnisses zwischen der Drehzahl des Nebenabtriebs und einer Hubzahl des Hauptverdichters wird sodann mindestens ein Verdichtungszeitpunkt, vorzugsweise eine Vielzahl von Verdichtungszeitpunkten, bestimmt. Die "Hubzahl" beschreibt dabei die Anzahl von Hubzyklen des Hauptverdichters innerhalb des Hauptkanals pro Zeiteinheit. Ist folglich beispielsweise mithilfe der mittels des Sensors erfassten Informationen bekannt, dass sich der Hauptverdichter in seiner Aushohlstellung befindet, und ist ferner bekannt, dass die Übersetzung zwischen der Drehzahl des Nebenabtriebs und der Hubzahl des Hauptverdichters beispielsweise 40:1 beträgt, und ist ferner bekannt, dass die Drehzahl des Nebenabtriebs 1000 Umdrehungen/min beträgt, lässt sich zumindest der nächste Verdichtungszeitpunkt, zu dem sich der Hauptverdichter in seiner Pressstellung befindet, exakt bestimmen. Ausgehend von der Ausholstellung muss der Hauptverdichter die Hälfte eines vollständigen Hubzyklus durchlaufen. Hierzu bedarf es mithin 20 Umdrehungen des Nebenabtriebs. Zur Ausführung dieser 20 Umdrehungen benötigt der Nebenabtrieb bei Zugrundelegen der genannten Drehzahl 1,2 s. Der nächste Verdichtungszeitpunkt liegt folglich ausgehend von der Ausholstellung 1,2 s in der Zukunft.

Hierbei ist es denkbar, dass nicht jeder Zeitpunkt, zu dem sich der Hauptverdichter in seiner Pressstellung befindet, auch als "Verdichtungszeitpunkt" identifiziert wird. Dies hat zur Folge, dass der Hauptverdichter innerhalb des Hauptkanals nicht mit jedem vollständigen Hubzyklus seine volle Verdichtungsleistung erbringen muss, sondern beispielsweise nur dann, wenn neues Material in den Hauptkanal überführt wird. Hubzyklen des Hauptverdichters, zu denen kein neues Material in den Hauptkanal eingebracht wird, werden auch als sogenannte "Leerhübe" bezeichnet. Die Bereitstellung einer erhöhten Abtriebsleistung seitens der Arbeitsmaschine ist typischerweise lediglich dann erforderlich, wenn neu in den Hauptkanal eingebrachtes Material erstmalig erfasst und gegen bereits in dem Hauptkanal vorliegendes Material gepresst wird. Ein im Zuge eines solchen Hubzyklus anfallender Verdichtungsdruck an dem Hauptverdichter ist maximal. Sollte eine Veränderung der Drehzahl des Nebenabtriebs erfolgen, ist dies bei der Berechnung weiterer Verdichtungszeitpunkte entsprechend zu berücksichtigen.

Alternativ oder zusätzlich zu der Verwendung eines Sensors, mittels dessen eine Position des Hauptverdichters innerhalb des Hauptkanals erfassbar ist, kann ein solches Verfahren von Vorteil sein, bei dem mittels mindestens eines Sensors eine Referenzstellung des Hauptverdichters innerhalb des Hauptkanals erfasst wird, die der Hauptverdichter vor Inbetriebnahme des Nebenabtriebs aufweist. Ausgehend von dieser Referenzstellung sowie in Kenntnis der Drehzahl des Nebenabtriebs und eines Übersetzungsverhältnisses zwischen der Drehzahl des Nebenabtriebs und einer Hubzahl des Hauptverdichters ist es sodann möglich, mindestens einen Verdichtungszeitpunkt, vorzugsweise eine Vielzahl von Verdichtungszeitpunkten, zu bestimmen. Die Berechnung der Verdichtungszeitpunkte erfolgt analog zu vorstehendem Beispiel. Zu beachten ist dabei, dass nicht jedes Einnehmen einer Pressstellung des Hauptverdichters mit einem Verdichtungszeitpunkt korrelieren muss. Dies hängt damit zusammen, dass nicht notwendigerweise mit jedem Hubzyklus des Hauptverdichters neues Material verdichtet wird. Dies kann beispielsweise nur bei jedem siebten oder achten Hubzyklus der Fall sein. Die Verdichtungszeitpunkte beschreiben typischerweise diejenigen, zu denen der Hauptverdichter nach der Eingabe neuen Materials in den Hauptkanal erstmalig seine Pressstellung erreicht.

Das erfindungsgemäße Verfahren weiter ausgestaltend wird von dem Untergrund aufgenommenes, zu verdichtendes Material zunächst einen Vorkanal zugeführt, innerhalb dessen das Material mittels eines Vorverdichters vorverdichtet wird. Der Vorverdichter kann insbesondere von einem sogenannten "Raffer" gebildet sein, der eine Kreisbewegung ausführt und im Zuge eines jeden Bewegungszyklus das in dem Vorkanal vorhandene Material erfasst und gegen eine feststehende Wandung drückt. Hierdurch wird die gewünschte Vorverdichtung erzielt. Nach Erzielen einer bestimmten Verdichtungsleistung wird das in dem Vorkanal vorhandene Material an den Hauptkanal übergeben. Insbesondere ist es denkbar, eine den Vorkanal abschließende Tür vorzusehen, die einen Übertrittsquerschnitt zwischen dem Vorkanal und dem Hauptkanal verschließt. Mittels Öffnung dieser Tür wird der Übertrittsquerschnitt freigegeben, sodass mittels des nächsten Bewegungszyklus des Vorverdichters das Material in den Hauptkanal geschoben wird.

In der bevorzugten Ausführungsform des Verfahrens wirkt ein solcher Vorverdichter mit mindestens einem Sensor zusammen, mittels dessen ein Übergabezeitpunkt erfassbar ist, zu dem das vorverdichtete Material dem Hauptkanal übergeben wird. Auf diese Weise ist feststellbar, welcher Hubzyklus des Hauptverdichters hinsichtlich der Bestimmung eines jeweiligen Verdichtungszeitpunkts relevant ist. Wie vorstehend bereits dargelegt, liegt ein Verdichtungszeitpunkt typischerweise nur in Verbindung mit einem Hub des Hauptverdichters vor, im Zuge dessen neu in den Hauptkanal eingeführtes Material verdichtet wird. Ein maximaler Verdichtungsdruck bzw. eine Lastspitze an dem Hauptverdichter liegt dann in aller Regel bei Erreichen der nächsten Pressstellung des Hauptverdichters an, mit der das neue Material erstmalig verdichtet wird. Die weiteren Hubzyklen des Hauptverdichters, bei denen kein neues Material in den Hauptkanal eingebracht wird, führen sodann zu einer weiteren Verdichtung des bereits in dem Hauptkanal befindlichen Materials, wobei jedoch der auf den Hauptverdichter wirkende Verdichtungsdruck gegenüber dem vorherigen Niveau reduziert ist. Unter Berücksichtigung der Information betreffend den Zeitpunkt der Übergabe von neu zu verdichtendem Material ausgehend von dem Vorkanal in den Hauptkanal kann folglich zumindest der jeweils nächste Verdichtungszeitpunkt exakt bestimmt werden. In Kenntnis der Frequenz, mit der neues Material in den Hauptkanal eingebracht wird, lassen sich zudem theoretisch beliebig viele weitere Verdichtungszeitpunkte bestimmen.

Das erfindungsgemäße Verfahren kann weiterhin dann von Vorteil sein, wenn mittels mindestens eines Sensors ein Verdichtungsdruck des Hauptverdichters erfasst wird, mit dem der Hauptverdichter das zu pressenden Material presst. Diese Ausgestaltung hat den besonderen Vorteil, dass Informationen betreffend Beträge des Verdichtungsdrucks für verschiedene Hubzyklen des Hauptverdichters erfasst werden. Auf diese Weise lässt sich feststellen, wie groß die Belastung auf den Hauptverdichter in dem jeweiligen Einzelfall tatsächlich ist und mithin, in welchem Umfang die Abtriebsleistung der Arbeitsmaschine zur Überwindung einer jeweiligen Erstellung des Hauptverdichters bei Erreichen eines jeweiligen Verdichtungszeitpunkts erhöht werden muss. Somit bedarf das Pressen von feuchtem Material typischerweise eines geringeren Verdichtungsdrucks als das Pressen von trockenem Material. Das Spitzenniveau der Abtriebsleistung kann dementsprechend über einen jeweiligen Arbeitsprozess hinweg angepasst werden, um den Randbedingungen des Einzelfalls gerecht zu werden.

In vorrichtungstechnischer Hinsicht wird die zugrunde liegende Aufgabe mittels eines landwirtschaftlichen Arbeitsverbunds mit den Merkmalen des Anspruchs 10 gelöst. Vorteilhafte Ausgestaltungen ergeben sich aus den Unteransprüchen 11 bis 14.

Die Quaderballenpresse des erfindungsgemäßen Arbeitsverbunds weist mindestens einen Sensor auf, mittels dessen Informationen betreffend eine Position des Hauptverdichters innerhalb des Hauptkanals erfassbar sind. Der Sensor ist dabei mittels mindestens einer Datenverbindung mit der Steuerung der Arbeitsmaschine zumindest mittelbar verbunden. Der Sensor und die Steuerung sind dazu konfiguriert, die Verfahrensschritte gemäß Anspruch 1 durchzuführen. Grundsätzlich ist es denkbar, dass an der Quaderballenpresse eine Mehrzahl von Sensoren angeordnet ist, die unmittelbar mit einer Übertragungseinrichtung verbunden sind, die gleichermaßen an der Quaderballenpresse angeordnet ist. Letztere kann sodann in Daten übertragender Weise mit der Steuerung der Arbeitsmaschine verbunden sein. Eine jeweilige Datenverbindung kann sowohl in einer kabelgebundenen als auch in einer kabellosen Verbindung bestehen.

Das vorstehend beschriebene erfindungsgemäße Verfahren ist mittels des erfindungsgemäßen Arbeitsverbunds besonders einfach durchführbar. Insbesondere wird ermöglicht, mittels des mindestens einen Sensors mindestens einen Verdichtungszeitpunkt zu bestimmen, zu dem ein maximaler Verdichtungsdruck auf den Hauptverdichter wirkt. In Kenntnis des Verdichtungszeitpunkts kann die Abtriebsleistung der Arbeitsmaschine zielgerichtet erhöht werden, sodass zum Verdichtungszeitpunkt ein Spitzenniveau der Abtriebsleistung an dem Hauptverdichter anliegt. Hierdurch wird die Überwindung der Pressstellung des Hauptverdichters sichergestellt, wobei in vorteilhafter Weise ein zu diesem Zweck in aller Regel an der Quaderballenpresse vorhandenes Schwungrad gegenüber solchen des Standes der Technik in seiner Größe und Masse reduziert werden kann.

In einer vorteilhaften Ausführungsform des Arbeitsverbunds ist mindestens ein Sensor von einem mit dem Hauptverdichter zusammenwirkenden Lagesensor gebildet. Dieser kann an dem Hauptverdichter bzw. dem Verdichterkolben des Hauptverdichters selbst angeordnet sein oder sich an bzw. in dem Hauptkanal befinden. Weitere Anbringungsorte für den Lagesensor sind gleichermaßen denkbar, sofern ein jeweils erfasster Parameter dazu geeignet ist, die Position des Hauptverdichters innerhalb des Hauptkanals zuverlässig zu erfassen.

Alternativ oder zusätzlich kann der Arbeitsverbund mindestens einen Sensor umfassen, der von einem Drehgeber gebildet ist und mit einem Getriebe des Hauptverdichters zusammenwirkt. Anhand eines solchen Sensors ist es möglich, eine Referenzstellung des Hauptverdichters innerhalb des Hauptkanals zu ermitteln, die dieser vor Inbetriebnahme der Quaderballenpresse einnimmt. Ausgehend von dieser Referenzstellung kann sodann in Kenntnis des Übersetzungsverhältnisses zwischen dem Nebenabtrieb und dem Hauptverdichter sich in Kenntnis der Drehzahl des Nebenabtriebs der Bewegungsverlauf des Hauptverdichters innerhalb des Hauptkanals zeitlich genau aufgeschlüsselt werden. Entsprechend ist es möglich, mindestens einen Verdichtungszeitpunkt, vorzugsweise eine Vielzahl von Verdichtungszeitpunkten, zu berechnen und auf diese Weise genau zu bestimmen. In Kenntnis dieser Informationen ist es sodann möglich, die Arbeitsmaschine derart zu steuern, dass die Erhöhung der Abtriebsleistung derart vorgenommen wird, dass die erhöhte Abtriebsleistung rechtzeitig zu einem jeweiligen Verdichtungszeitpunkt an dem Hauptverdichter anliegt.

Den erfindungsgemäßen Arbeitsverbund weiter ausgestaltend umfasst dieser mindestens einen Sensor, mittels dessen ein an dem Hauptverdichter anliegender Verdichtungsdruck erfassbar ist. Dieser Verdichtungsdruck bezeichnet eine auf eine vordere Druckfläche des Hauptverdichters bezogene Druckkraft. In Momenten, in denen der Hauptverdichter innerhalb des Hauptkanals ausgehend von seiner Pressstellung in Richtung seiner Aushohlstellung zurückgezogen wird, liegt kein Verdichtungsdruck an. Im Zuge der Bewegung in Richtung der Pressstellung kann bereits ein (minimaler) Verdichtungsdruck messbar sein, der infolge eines Luftwiderstands innerhalb des Hauptkanals anliegt. Im Übrigen tritt insbesondere dann ein nennenswerter Verdichtungsdruck auf, sobald der Hauptverdichter mit zu verdichtendem Material eingreift. Der Verdichtungsdruck ist in aller Regel maximal, wenn der Hauptverdichter neu in den Hauptkanal eingeführtes Material erfasst und dieses erstmalig gegen bereits verdichtetes Material presst. Der Sensor zur Erfassung des Verdichtungsdrucks ermöglicht es, die zur Überwindung der Pressstellung zum Verdichtungszeitpunkt erforderliche Verdichtungsleistung des Hauptverdichters zu ermitteln und entsprechend das Spitzenniveau, auf das die Abtriebsleistung zwecks Überwindung der Pressstellung erhöht wird, zu kalibrieren. Auf diese Weise wird vermieden, dass die Abtriebsleistung auf ein nicht notwendiges Spitzenniveau angehoben wird, wodurch nur die beteiligten Bauteile sowohl der Arbeitsmaschine als auch der Quaderballenpresse einem erhöhten Verschleiß unterlegen wären.

Der erfindungsgemäße Arbeitsverbund ist weiterhin dann von besonderem Vorteil, wenn die Quaderballenpresse einen Vorkanal aufweist, innerhalb dessen zu pressendes Material mittels eines Vorverdichters vorverdichtbar ist. Das vorverdichtete Material ist sodann einem Hauptkanal übergebbar. Der Vorverdichter wirkt mit mindestens einem Sensor zusammen, mittels dessen Informationen betreffend eine Übergabe von Material in den Hauptkanal erfassbar sind. Zumindest ist es mittels des Sensors feststellbar, dass bzw. wenn eine Übergabe von Material an den Hauptkanal stattfindet. In Kenntnis dieser Information ergibt sich, dass der nächste Hubzyklus des Hauptverdichters, mit dem das in den Hauptkanal übergebene Material erfasst wird, mit einem zumindest lokalen Maximum des Verdichtungsdrucks an dem Hauptverdichter bei Erreichen seiner Pressstellung einhergeht. Der zugehörige Zeitpunkt ist mithin als ein "Verdichtungszeitpunkt" im Sinne der vorliegenden Anmeldung identifizierbar. Die Identifizierung von Verdichtungszeitpunkten ist insoweit von Vorteil, als auf eine pauschale Erhöhung der Abtriebsleistung der Arbeitsmaschine im Zuge eines jeden Erreichens der Pressstellung des Hauptverdichters vermieden werden kann. Stattdessen kann zielgerichtet nur dann das Niveau der Abtriebsleistung erhöht werden, wenn tatsächlich ein erhöhter Verdichtungsdruck erforderlich ist.

Das erfindungsgemäße Verfahren sowie der erfindungsgemäße landwirtschaftliche Arbeitsverbund sind nachstehend anhand eines Ausführungsbeispiels, das in den Figuren gezeigt ist, näher erläutert. Es zeigt:
- Fig. 1:: Eine Seitenansicht eines erfindungsgemäßen Arbeitsverbunds,
- Fig. 2:: Ein vertikaler Querschnitt durch eine Quaderballenpresse des Arbeitsverbunds gemäß Figur 1,
- Fig. 3:: Ein Diagramm, das einen zeitlichen Verlauf eines Verdichtungsdrucks eines Hauptverdichters in Überlagerung mit einem zeitlichen Verlauf eines Abtriebsmoments einer Arbeitsmaschine gemäß dem Stand der Technik zeigt, und
- Fig. 4:: Ein Diagramm, das einen zeitlichen Verlauf eines Verdichtungsdrucks eines Hauptverdichters in Überlagerung mit einem zeitlichen Verlauf eines Abtriebsmoments eine Arbeitsmaschine gemäß der vorliegenden Erfindung zeigt.

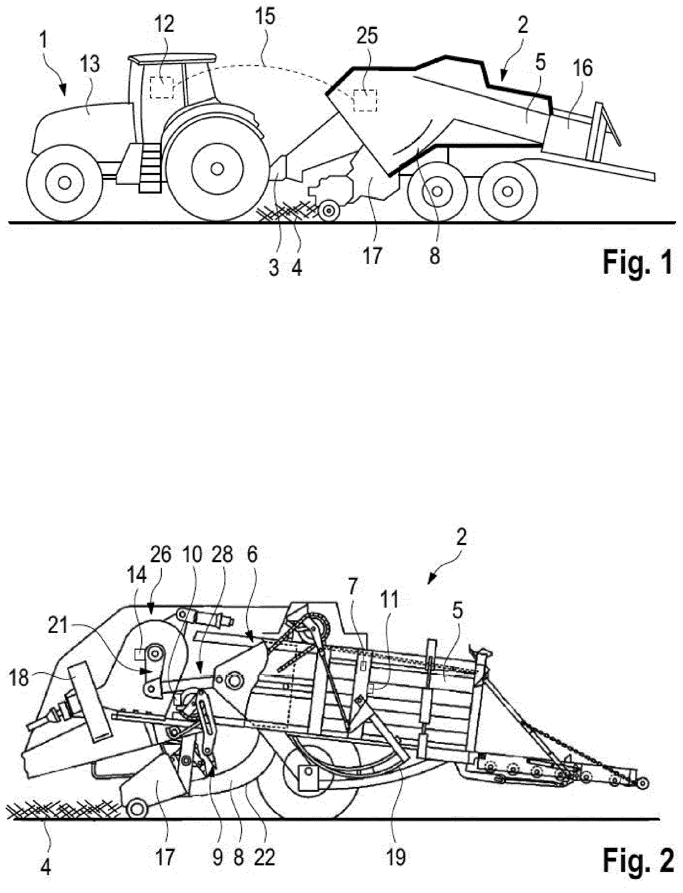

Ein Ausführungsbeispiel, das in den **Figuren 1 und 2** gezeigt ist, umfasst einen erfindungsgemäßen landwirtschaftlichen Arbeitsverbund, der von einer landwirtschaftlichen Arbeitsmaschine **1** und einer landwirtschaftlichen Quaderballenpresse **2** gebildet ist. Die Arbeitsmaschine **1** ist hier von einem Traktor gebildet, der an seiner Rückseite mit einer in den Figuren nicht dargestellten Schleppkupplung ausgestattet ist. Die Quaderballenpresse **2** ist mittels einer formschlüssigen Verbindung mit besagter Schleppkupplung verbunden, sodass die Quaderballenpresse **2** mittels der Arbeitsmaschine **1** schleppbar bzw. ziehbar ist. Ferner ist die Quaderballenpresse **2** mit einem Nebenabtrieb **3** der Arbeitsmaschine **1** in Drehmoment übertragender Weise verbunden. Der Nebenabtrieb **3** ist hier von einer Zapfwelle gebildet, die gleichermaßen an einer Rückseite der Arbeitsmaschine **1** angeordnet ist. Eine an diesem Nebenabtrieb **3** zur Verfügung gestellte Abtriebsleistung ist mittels einer in den Figuren nicht dargestellten Drehmomentkupplung der Quaderballenpresse **2** übernehmbar und sodann im Weiteren zum Antrieb der Quaderballenpresse **2** verwendbar. Die Arbeitsmaschine **1** wird hier von einer Verbrennungskraftmaschine **13,** die von einem typischen Dieselaggregat gebildet ist, angetrieben. Die Verbrennungskraftmaschine **13** dient mithin auch zur Bereitstellung der Abtriebsleistung.

Die Quaderballenpresse **2** ist dazu geeignet, Material **4,** das insbesondere von Pflanzenresten geernteter Pflanzen, beispielsweise Stroh, gebildet sein kann, zu verdichten und im Zuge dessen zu quaderförmigen Quaderballen **16** zu pressen. Hierzu wird das Material **4** mittels einer Aufnahmeeinrichtung **17** von einem Untergrund aufgenommen und einem Vorkanal **8** zugeführt. Innerhalb des Vorkanals **8** wird das Material **4** mittels eines Vorverdichters **9,** der hier in Form eines Raffers ausgebildet ist, vorverdichtet. Hierbei wird der Vorverdichter **9** mittels einer kreisenden Bewegung fortwährend innerhalb des Vorkanals **8** zyklisch vor und außerhalb des Vorkanals **8** zurückgeführt. Mit jedem Bewegungszyklus des Vorverdichters **9** wird das in dem Vorkanal **8** befindliche Material **4** gegen eine Wandung des Vorkanals **8** gedrückt und im Zuge dessen (vor-)verdichtet. Dies ist besonders gut anhand von **Figur 2** erkennbar. Nach einer bestimmten Anzahl von Bewegungszyklen des Vorverdichters **9** wird ein Übertrittsquerschnitt **22** freigegeben, sodass das vorverdichtete Material **4** mittels eines weiteren Bewegungszyklus des Vorverdichters **9** in einen Hauptkanal **5** übergeben werden kann. Dieser letzte Bewegungszyklus des Vorverdichters **9** kann als spezieller Übergabezyklus ausgebildet sein.

Der Hauptkanal **5** weist einen rechteckigen Querschnitt auf, anhand dessen sich letztlich die Quaderform der Quaderballen **16** ergibt. Innerhalb des Hauptkanals **5** wirkt ein Hauptverdichter **6,** der im Sinne eines Hubkolbens fortwährend innerhalb des Hauptkanals **5** oszillierend hin und her bewegt wird. Hierbei bewegt sich der Hauptverdichter **6** zwischen zwei extremalen Stellungen, nämlich einer maximal in dem Hauptkanal **5** zurückgezogenen Aushohlstellung und einer maximal in dem Hauptkanal **5** ausgefahrenen Pressstellung. Nach dem sukzessiven Pressen einer bestimmten Menge von Material **4** wird dieses Material **4** mittels einer Bindeeinrichtung **19** zu einem Quaderballen **16** zusammengefasst, indem das Material **4** mit Bindeschnüren umschlossen und auf diese Weise von benachbartem Material getrennt wird.

Der Hauptverdichter **6** wird in dem gezeigten Beispiel mittels eines Kurbelgetriebes **20** angetrieben, das über einen Kurbelarm **21** und ein Übertragungselement **28** verfügt. Das Kurbelgetriebe **20** ist in Drehmoment übertragender Weise mit der Drehmomentkupplung der Quaderballenpresse **2** verbunden, sodass von dem Nebenabtrieb **3** übernommenes Drehmoment dem Kurbelgetriebe **20** zur Verfügung gestellt werden kann. Ferner wirkt das Kurbelgetriebe **20** mit einem Schwungrad **18** zusammen, mittels dessen eine Rotationsenergie speicherbar und infolgedessen vorhaltbar ist. Letztere ist zu Überwindung von auf den Hauptverdichter **6** wirkender Lastspitzen des Verdichtungsdrucks nutzbar.

Die Quaderballenpresse **2** umfasst eine Mehrzahl von Sensoren **7, 10, 11, 14,** mittels derer verschiedene Informationen betreffend einen Betriebszustand der Quaderballenpresse **2** erfassbar sind. Insbesondere ist an dem Hauptverdichter **6** ein Sensor **7** angeordnet, der eine Lage des Hauptverdichters **6** innerhalb des Hauptkanals **5** erfassen kann. In Kenntnis der Lage des Hauptverdichters **6** innerhalb des Hauptkanals **5** wird nunmehr erfindungsgemäß mindestens ein Verdichtungszeitpunkt bestimmt, zu dem sich der Hauptverdichter **6** in seiner Pressstellung befindet, wobei er in aller Regel neu in den Hauptkanal **5** eingebrachtes Material **4** presst. Hierzu ist lediglich die Kenntnis einer Drehzahl des Nebenabtriebs **3** sowie eines Übersetzungsverhältnisses dieser Drehzahl hin zu einer Hubzahl des Hauptverdichters **6** innerhalb des Hauptkanals **5** erforderlich. Besagtes Übersetzungsverhältnis wird durch das Kurbelgetriebe **20** bestimmt.

Weiterhin umfasst die Quaderballenpresse **2** einen an dem Kurbelgetriebe **20** angeordneten Sensor **14,** der in Form eines Drehgebers ausgebildet ist. Mittels dieses Sensors **14** wird eine Referenzstellung des Hauptverdichters **6** vor Inbetriebnahme desselben bzw. einer Kopplung des Kurbelgetriebe **20** mit dem Nebenabtrieb **3** erfasst. In Kenntnis dieser Referenzstellung sowie abermals in Kenntnis eines Übersetzungsverhältnisses zwischen der Drehzahl des Nebenabtriebs **3** und der Hubzahl des Hauptverdichters **6** sowie der Drehzahl des Nebenabtriebs **3** ist es möglich, die Stellung des Hauptverdichters **6** innerhalb des Hauptkanals **5** zu jedem Zeitpunkt zu bestimmen und mithin mindestens einen Verdichtungszeitpunkt genau zu bestimmen.

Da nicht mit jedem Einnehmen einer Pressstellung des Hauptverdichters **6** notwendigerweise ein Verdichtungszeitpunkt vorliegt, ist der Vorverdichter **9** in dem gezeigten Beispiel mit einem weiteren Sensor **10** ausgestattet. Mittels dieses Sensors **10** ist es möglich, einen Zeitpunkt zu bestimmen, zu dem vorverdichtetes Material **4** mittels des Vorverdichters **9** in den Hauptkanal **5** übergeben wird. Diese Information ist insoweit von Interesse, als mit der Übergabe des vorverdichteten Materials **4** fest steht, dass der Hauptverdichter **6** mit seinem nächsten Hubzyklus neu zu verdichtendes Material **4** erfasst. Mithin wird mit dem nächsten Erreichen der Pressstellung des Hauptverdichters **6** ein auf letzteren wirkender Verdichtungsdruck zumindest ein lokales Maximum einnehmen. Die Überwindung der Pressstellung ist demzufolge vergleichsweise beschwerlich, der der wirkende Verdichtungsdruck diesem entgegenwirkt. Nach alldem ergibt sich, dass der entsprechende Hubzyklus des Hauptverdichters **6** mit Einnahmen seiner Pressstellung zu einem Verdichtungszeitpunkt im Sinne der vorliegenden Anmeldung führt, zu dem erfindungsgemäß eine erhöhte Abtriebsleistung mittels der Arbeitsmaschine **2** zur Verfügung gestellt wird. Die Kombination aus Informationen mindestens eines der Sensoren **7, 14** mit der Information des Sensors **10** ermöglicht es mithin, zumindest diesen nächsten Verdichtungszeitpunkt genau zu bestimmen.

Diese Information wird mittels einer in **Figur 1** dargestellten Datenverbindung **15** an eine Steuerung **12** der Arbeitsmaschine **1** übermittelt. In dem gezeigten Beispiel verfügt die Quaderballenpresse **2** über eine Übertragungseinrichtung **25,** die mittels einzelner, in den Figuren nicht gesondert bezeichneter Datenverbindungen mit den einzelnen Sensoren **7, 10, 11, 14** verbunden ist. Die Übertragung von Informationen von den Sensoren **7, 10, 11, 14** hin zu der Steuerung **12** erfolgt hier demzufolge lediglich mittelbar über die Übertragungseinrichtung **25.** Die Steuerung **12** ist nunmehr dazu geeignet, die zur Verfügung gestellte Information derart zu verarbeiten, dass sie die Verbrennungskraftmaschine **13** der Arbeitsmaschine **1** entsprechend ansteuern kann. Dies erfolgt mit der Maßgabe, die Abtriebsleistung der Arbeitsmaschine **1** auf ein zumindest lokales Spitzenniveau anzuheben und diese Anhebung derart vorzunehmen, dass die erhöhte Abtriebsleistung zum Verdichtungszeitpunkt am Hauptverdichter **6** anliegt. Die Steuerung **12** verfügt über die notwendigen Informationen betreffend einen Zeitversatz zwischen der Erhöhung der Leistung der Verbrennungskraftmaschine **13** und dem effektiven Anliegen der erhöhten Abtriebsleistung an dem Hauptverdichter **6.** Ein entsprechender Zeitversatz kann mithin in Kenntnis des Verdichtungszeitpunkts berücksichtigt werden, sodass die erhöhte Abtriebsleistung rechtzeitig zur Verfügung steht.

In dem gezeigten Beispiel ist der Hauptverdichter **6** zusätzlich mit einem Sensor **11** ausgestattet, der einen auf eine vordere Stirnfläche des Hauptverdichters **6** einwirkenden Verdichtungsdruck erfassen kann. Auf diese Weise ist es möglich, eine Zeitverlaufskurve zu erstellen, die den Verdichtungsdruck des Hauptverdichters **6** über die Zeit aufträgt. Anhand dieser Kurve sind auf den Hauptverdichter **6** wirkender Lastspitzen zu den einzelnen Verdichtungszeitpunkt in besonders gut erkennbar. Ebenfalls ist der Betrag des Verdichtungsdrucks ermittelbar, sodass eine Kalibrierung der mittels der Arbeitsmaschine **1** zur Verfügung gestellten Abtriebsleistung vorgenommen werden kann. Somit ist der Verdichtungsdruck an dem Hauptverdichter **6** nicht notwendigerweise immer derselbe, sondern vielmehr von individuellen Randbedingungen eines jeweiligen Arbeitseinsatzes abhängig. Die ermittelten Informationen können an die Steuerung **12** der Arbeitsmaschine **1** geleitet und dort entsprechend berücksichtigt werden, sodass die Abtriebsleistung der Arbeitsmaschine **1** nicht über ein notwendiges Niveau hinaus angehoben und insbesondere nicht unterhalb eines notwendigen Niveaus gehalten wird.

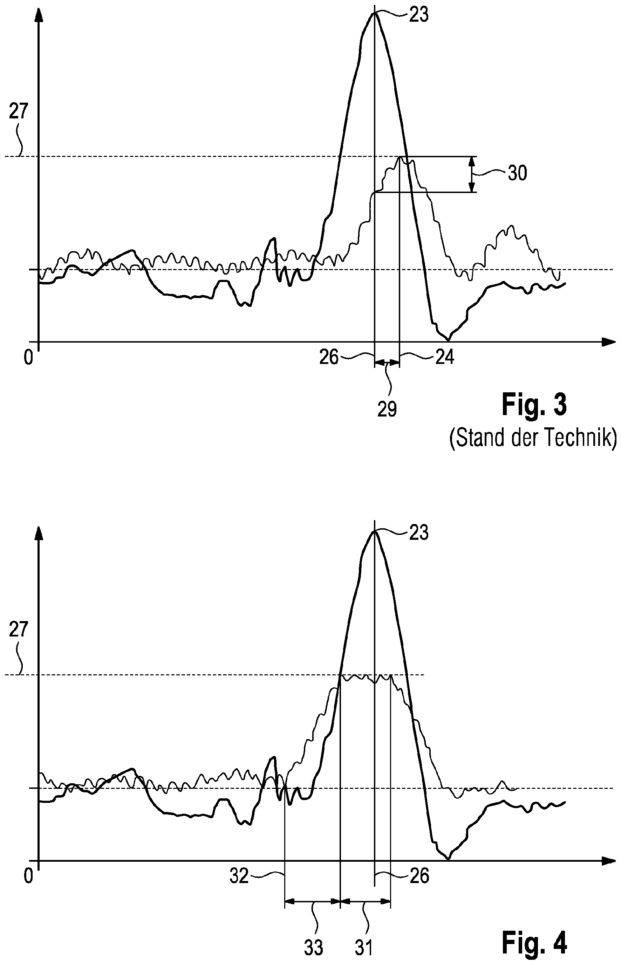

Zeitverlaufskurven, die einen Verlauf des Verdichtungsdrucks des Hauptverdichters **6** mit einem Verlauf der dem Hauptverdichter **6** effektiv zur Verfügung stehenden Abtriebsleistung überlagert, sind in den Diagrammen gemäß den **Figuren 3 und 4** dargestellt. Das in **Figur 3** dargestellte Diagramm beschreibt den Stand der Technik, während das in **Figur 4** dargestellte Diagramm die Erfindung wiedergibt. Anhand von **Figur 3** ergibt sich besonders gut, dass im Stand der Technik ein Spitzenzeitpunkt **24** klar nach einem Verdichtungszeitpunkt **26** liegt. Dabei bezeichnet der Spitzenzeitpunkt **24** denjenigen Zeitpunkt, zu dem sich die Abtriebsleistung der Arbeitsmaschine **1** auf ihrem Spitzenniveau **27** befindet. Der Verdichtungszeitpunkt **26** bezeichnet derweil denjenigen Zeitpunkt, zu dem an dem Hauptverdichter **6** eine Lastspitze **23** anliegt, die mit einem lokalen Maximum des Verdichtungsdrucks korrespondiert. Wie sich anhand von **Figur 3** deutlich ergibt, ist die Abtriebsleistung im Moment des Verdichtungszeitpunkts **26** zwar bereits gegenüber einem sonstigen Leistungsniveau erhöht, hat jedoch sein Spitzenniveau **27** noch nicht erreicht. Letzteres liegt erst zeitlich nach dem Verdichtungszeitpunkt **26** an, wenn es bereits nicht mehr benötigt wird. In einem Zeitraum **29,** der zwischen dem Verdichtungszeitpunkt **26** und dem Spitzenzeitpunkt **24** verstreicht, nimmt die Abtriebsleistung der Arbeitsmaschine **1** um ein Zuwachsmaß **30** zu, welches jedoch nach dem Verdichtungszeitpunkt **26** nicht mehr benötigt wird und entsprechend lediglich eine unnötige Belastung der Komponenten der Quaderballenpresse **2** bedeutet.

Demgegenüber veranschaulicht das Diagramm gemäß **Figur 4** den erfindungsgemäßen Erfolg, der zu einer zeitlichen Übereinstimmung des Verdichtungszeitpunkts **26** und des Spitzenzeitpunkts **24** führt, wobei der Spitzenzeitpunkt **24** hier vielmehr durch einen Spitzenzeitraum **31** bestimmt ist, über den hinweg die Abtriebsleistung der Arbeitsmaschine **1** sich auf ihrem Spitzenniveau befindet. Der Spitzenzeitraum **31** beginnt vor dem Verdichtungszeitpunkt **26** und endet nach Überschreiten des Verdichtungszeitpunkts **26.** Auf diese Weise ist sichergestellt, dass das Spitzenniveau **27** der Abtriebsleistung zum Verdichtungszeitpunkt **26** anliegt. Mit anderen Worten wird mittels des erfindungsgemäßen Verfahrens erreicht, dass die an dem Hauptverdichter **6** anliegende Abtriebsleistung sich genau dann auf ihrem Spitzenniveau **27** befindet, wenn der Verdichtungsdruck des Hauptverdichters **6** seine Lastspitze **23** aufweist. Die mittels der Arbeitsmaschine 1 zur Verfügung gestellte Abtriebsleistung kann auf diese Weise effizient genutzt werden, während unnötige Bauteilbelastungen infolge einer erhöhten, jedoch nicht benötigten Abtriebsleistung vermieden werden.

Bei einem Vergleich der Diagramme gemäß den **Figuren 3 und 4** wird deutlich, dass die Anhebung des Leistungsniveaus der Abtriebsleistung zeitlich relativ zu dem Verdichtungszeitpunkt **26** betrachtet vorverlegt ist. Der frühere Beginn der Anhebung der Abtriebsleistung führt dazu, dass letztere sich zum Verdichtungszeitpunkt **26** auf ihrem Spitzenniveau **27** befindet. Die Möglichkeit zur rechtzeitigen bzw. gegenüber dem Stand der Technik früheren Steigerung der Abtriebsleistung wird mittels der erfindungsgemäßen Bestimmung des Verdichtungszeitpunkts **26** geschaffen, wobei in Kenntnis einer Trägheit des Systems im Hinblick auf die effektive Erhöhung der Abtriebsleistung ein Startzeitpunkt **32** bestimmt wird, zu dem mit der Erhöhung der Abtriebsleistung der Arbeitsmaschine **1** begonnen wird. Zwischen dem Startzeitpunkt **32** und dem Erreichen des Spitzenniveaus **27** der an dem Hauptverdichter **6** anliegenden Abtriebsleistung liegt ein Hochfahrzeitraum **33.**

### Bezugszeichenliste

- 1: Arbeitsmaschine
- 2: Quaderballenpresse
- 3: Nebenabtrieb
- 4: Material
- 5: Hauptkanal
- 6: Hauptverdichter
- 7: Sensor
- 8: Vorkanal
- 9: Vorverdichter
- 10: Sensor
- 11: Sensor
- 12: Steuerung
- 13: Verbrennungskraftmaschine
- 14: Sensor
- 15: Datenverbindung
- 16: Quaderballen
- 17: Aufnahmeeinrichtung
- 18: Schwungrad
- 19: Bindeeinrichtung
- 20: Kurbelgetriebe
- 21: Kurbelarm
- 22: Übertrittsquerschnitt
- 23: Lastspitze
- 24: Spitzenzeitpunkt
- 25: Übertragungseinrichtung
- 26: Verdichtungszeitpunkt
- 27: Spitzenniveau
- 28: Übertagungselement
- 29: Zeitraum
- 30: Zuwachsmaß
- 31: Spitzenzeitraum
- 32: Startzeitpunkt
- 33: Hochfahrzeitraum

## Patentansprüche

1. Verfahren zum Betrieb eines landwirtschaftlichen Arbeitsverbundes, der Arbeitsverbund umfassend
- eine landwirtschaftliche Arbeitsmaschine (1) sowie
- eine landwirtschaftliche Quaderballenpresse (2),
wobei die Quaderballenpresse (2) an die Arbeitsmaschine (1) angekoppelt und an einen Nebenabtrieb (3) der Arbeitsmaschine (1) angeschlossen ist, sodass die Quaderballenpresse (2) mittels der Arbeitsmaschine (1) schleppbar und antreibbar ist,
umfassend die folgenden Verfahrensschritte:
a) Zu pressendes Material (4) wird von einem Untergrund aufgenommen und zumindest mittelbar einem Hauptkanal (5) eines Hauptverdichters (6) zugeführt.
b) Innerhalb des Hauptkanals (5) wird das vorverdichtete Material mittels des Hauptverdichters (6) erfasst und gegen bereits in dem Hauptkanal (5) befindliches Material (4) gepresst, wobei der Hauptverdichter (6) oszillierend zwischen einer maximal in dem Hauptkanal (5) zurückgezogenen Ausholstellung und einer maximal in dem Hauptkanal (5) ausgefahrenen Pressstellung überführt wird,
**gekennzeichnet durch** die folgenden Verfahrensschritte:
c) Ausgehend von mindestens einem Betriebszeitpunkt des Arbeitsverbundes wird mindestens ein in der Zukunft liegender Verdichtungszeitpunkt (26) bestimmt, zu dem sich der Hauptverdichter (6) in seiner Pressstellung befinden wird.
d) Eine Abtriebsleistung der Arbeitsmaschine (1) wird derart auf ein Spitzenniveau (27) erhöht, dass das Spitzenniveau (27) zum Verdichtungszeitpunkt (26) an dem Hauptverdichter (6) anliegt.

2. Verfahren nach Anspruch 1, **dadurch gekennzeichnet, dass** die Abtriebsleistung nach dem Verdichtungszeitpunkt (26) auf ein gegenüber dem Spitzenniveau (27) verringertes Leistungsniveau reduziert wird.

3. Verfahren nach Anspruch 1 oder 2, **dadurch gekennzeichnet, dass** die Abtriebsleistung derart auf das Spitzenniveau (27) erhöht wird, dass es über einen Spitzenzeitraum hinweg an dem Hauptverdichter (6) anliegt, der vor dem jeweiligen Verdichtungszeitpunkt (26) beginnt und nach diesem endet.

4. Verfahren nach einem der Ansprüche 1 bis 3, **dadurch gekennzeichnet, dass** in Kenntnis des Verdichtungszeitpunkts (26) sowie einer Trägheit eines Anhebens der Abtriebsleistung auf das Spitzenniveau (27) ein Startzeitpunkt (32) bestimmt wird, zu dem mit der Anhebung eines Leistungsniveaus einer Verbrennungskraftmaschine (13) der Arbeitsmaschine (1) begonnen wird.

5. Verfahren nach einem der Ansprüche 1 bis 4, **dadurch gekennzeichnet, dass** der Arbeitsmaschine (1) ausgehend von der Quaderballenpresse (2) mindestens eine Information zur Verfügung gestellt wird, mittels derer mindestens ein Verdichtungszeitpunkt (26) bestimmt wird.

6. Verfahren nach Anspruch 5, **dadurch gekennzeichnet, dass** mittels mindestens eines Sensors (7) eine Position des Hauptverdichters (6) innerhalb des Hauptkanals (5) erfasst wird, anhand derer in Kenntnis der Drehzahl des Nebenabtriebs (3) sowie eines Übersetzungsverhältnisses zwischen der Drehzahl des Nebenabtriebs (3) und einer Hubzahl des Hauptverdichters (6) mindestens ein Verdichtungszeitpunkt (26) bestimmt wird.

7. Verfahren nach Anspruch 5 oder 6, **gekennzeichnet durch** mindestens einen Sensor (14), mittels dessen eine Referenzstellung des Hauptverdichters (6) innerhalb des Hauptkanals (5) vor Inbetriebnahme des Nebenabtriebs (3) erfasst wird, wobei mindestens ein Verdichtungszeitpunkt (26) ausgehend von der Referenzstellung des Hauptverdichters (6) in Kenntnis einer Drehzahl des Nebenabtriebs (3) und eines Übersetzungsverhältnisses zwischen der Drehzahl des Nebenabtriebs (3) und einer Hubzahl des Hauptverdichters (6) bestimmt wird.

8. Verfahren nach einem der Ansprüche 1 bis 7, **dadurch gekennzeichnet, dass** von dem Untergrund aufgenommenes Material (4) zunächst einem Vorkanal (8) zugeführt wird, innerhalb dessen das Material (4) mittels eines Vorverdichters (9) vorverdichtet wird, bevor es ausgehend von dem Vorverdichter (9) an den Hauptkanal (5) übergeben wird, wobei der Vorverdichter (9) mit mindestens einem Sensor (10) zusammenwirkt, mittels dessen ein Übergabezeitpunkt erfassbar ist, zu dem das vorverdichtete Material (4) dem Hauptkanal (5) übergeben wird.

9. Verfahren nach einem der Ansprüche 1 bis 8, **dadurch gekennzeichnet, dass** mittels mindestens eines Sensors (11) ein Verdichtungsdruck des Hauptverdichters (6) erfasst wird, mit dem der Hauptverdichter (6) das zu pressende Material (4) presst.

10. Landwirtschaftlicher Arbeitsverbund umfassend
- eine landwirtschaftliche Arbeitsmaschine (1) sowie
- eine landwirtschaftliche Quaderballenpresse (2),
wobei die Quaderballenpresse (2) an die Arbeitsmaschine (1) angekoppelt und an einen Nebenabtrieb (3) der Arbeitsmaschine (1) angeschlossen ist, sodass die Quaderballenpresse (2) mittels der Arbeitsmaschine (1) schleppbar und antreibbar ist,
wobei die Arbeitsmaschine (1) mindestens eine Steuerung (12) aufweist, mittels derer ein Leistungsniveau einer Verbrennungskraftmaschine (13) der Arbeitsmaschine (1) steuerbar ist,
wobei die Quaderballenpresse (2) mindestens einen Hauptverdichter (6) aufweist, der innerhalb eines Hauptkanals (4) oszillierend zwischen einer maximal in dem Hauptkanal (5) zurückgezogenen Ausholstellung und einer maximal in dem Hauptkanal (5) ausgefahrenen Pressstellung überführbar ist,
wobei die Quaderballenpresse (2) mindestens einen Sensor (7, 14) aufweist, mittels dessen Informationen betreffend eine Position des Hauptverdichters (6) innerhalb des Hauptkanals (5) erfassbar sind,
wobei der Sensor (7, 14) und die Steuerung (12) der Arbeitsmaschine (1) mittels mindestens einer Datenverbindung (15) zumindest mittelbar miteinander verbunden sind,
**dadurch gekennzeichnet, dass**
der Sensor (7, 14) und die Steuerung (12) dazu konfiguriert sind, die Verfahrensschritte gemäß Anspruch 1 durchzuführen.

11. Arbeitsverbund nach Anspruch 10, **dadurch gekennzeichnet, dass** mindestens ein Sensor (7) von einem mit dem Hauptverdichter (6) zusammenwirkenden Lagesensor gebildet ist.

12. Arbeitsverbund nach Anspruch 10 oder 11, **dadurch gekennzeichnet, dass** mindestens ein Sensor (14) von einem Drehgeber gebildet ist, der mit einem Getriebe (16) des Hauptverdichters (6) zusammenwirkt.

13. Arbeitsverbund nach einem der Ansprüche 10 bis 12, **gekennzeichnet durch** mindestens einen Sensor (11), mittels dessen ein an dem Hauptverdichter (6) anliegender Verdichtungsdruck erfassbar ist, mit dem der Hauptverdichter (6) das zu pressende Material (4) presst.

14. Arbeitsverbund nach einem der Ansprüche 10 bis 13, **dadurch gekennzeichnet, dass** die Quaderballenpresse (2) einen Vorkanal (8) aufweist, innerhalb dessen zu pressendes Material (4) mittels eines Vorverdichters (9) vorverdichtbar und an den Hauptkanal (5) übergebbar ist, wobei mindestens ein Sensor (10) mit dem Vorverdichter (9) zusammenwirkt, mittels dessen Informationen betreffend eine Übergabe von Material (4) ausgehend von dem Vorkanal (8) an den Hauptkanal (5) erfassbar sind.

## Claims

1. Method for operating an agricultural working group, the working group comprising
- an agricultural working machine (1) and
- an agricultural square baler (2),
wherein the square baler (2) is coupled to the working machine (1) and connected to a power take-off (3) of the working machine (1) so that the square baler (2) can be towed and driven by means of the working machine (1),
comprising the following method steps:
a) Material (4) to be pressed is picked up from a ground and fed at least indirectly to a main channel (5) of a main compactor (6).
b) Within the main channel (5), the pre-compacted material is collected by means of the main compactor (6) and pressed against material (4) already present in the main channel (5), the main compactor (6) being transferred in an oscillating manner between a maximum retrieval position retracted in the main channel (5) and a maximum pressing position extended in the main channel (5),
**characterised by** the following method steps:
c) Starting from at least one operating time of the working group, at least one compression time (26) lying in the future is determined at which the main compactor (6) will be in its pressing position.
d) An output power of the working machine (1) is increased to a peak level (27) such that the peak level (27) is applied to the main compactor (6) at the compression time (26).

2. Method according to claim 1, **characterised in that** the output power is reduced after the compression point (26) to a reduced power level compared to the peak level (27).

3. Method according to claim 1 or 2, **characterized in that** the output power is increased to the peak level (27) such that it is applied to the main compactor (6) over a peak period starting before and ending after the respective compression time (26).

4. Method according to any one of claims 1 to 3, **characterised in that** a starting time (32) at which raising of a power level of an internal combustion engine (13) of the working machine (1) is started is determined in knowledge of the compression time (26) and an inertia of raising the output power to the peak level (27).

5. Method according to one of the claims 1 to 4, **characterised in that**, starting from the square baler (2), at least one item of information is made available to the working machine (1), by means of which at least one compaction time (26) is determined.

6. Method according to claim 5, **characterised in that** a position of the main compactor (6) within the main channel (5) is detected by means of at least one sensor (7), by means of which at least one compression time (26) is determined in knowledge of the rotational speed of the power take-off (3) and of a transmission ratio between the rotational speed of the power take-off (3) and a number of strokes of the main compactor (6).

7. Method according to claim 5 or 6, **characterised by** at least one sensor (14), by means of which a reference position of the main compactor (6) within the main channel (5) is detected before the power take-off (3) is put into operation, wherein at least one compression time (26) is determined on the basis of the reference position of the main compactor (6) in the knowledge of a rotational speed of the power take-off (3) and a transmission ratio between the rotational speed of the power take-off (3) and a number of strokes of the main compactor (6).

8. Method according to one of the claims 1 to 7, **characterised in that** material (4) picked up from the ground is first supplied to a pre-channel (8), within which the material (4) is pre-compacted by means of a pre-compactor (9) before it is transferred from the pre-compactor (9) to the main channel (5), the pre-compactor (9) cooperating with at least one sensor (10), by means of which it is possible to detect a transfer time at which the pre-compacted material (4) is transferred to the main channel (5).

9. Method according to one of claims 1 to 8, **characterised in that** a compression pressure of the main compactor (6), with which the main compactor (6) presses the material (4) to be pressed, is detected by means of at least one sensor (11).

10. Agricultural working group
- an agricultural working machine (1) and
- an agricultural square baler (2),
wherein the square baler (2) is coupled to the working machine (1) and connected to a power take-off (3) of the working machine (1) so that the square baler (2) can be towed and driven by means of the working machine (1),
wherein the working machine (1) comprises at least one controller (12) by means of which a power level of an internal combustion engine (13) of the working machine (1) can be controlled,
wherein the square baler (2) comprises at least one main compactor (6) which is transferable in a main channel (4) in an oscillating manner between a maximum retrieval position retracted in the main channel (5) and a maximum pressing position extended in the main channel (5),
wherein the square baler (2) comprises at least one sensor (7, 14) by means of which information concerning a position of the main compactor (6) within the main channel (5) can be detected,
wherein the sensor (7, 14) and the controller (12) of the working machine (1) are at least indirectly connected to each other by means of at least one data connection (15),
**characterised in that**
the sensor (7, 14) and the controller (12) are configured to perform the method steps according to claim 1.

11. Working group according to claim 10, **characterised in that** at least one sensor (7) is formed by a position sensor cooperating with the main compactor (6).

12. Working group according to claim 10 or 11, **characterised in that** at least one sensor (14) is formed by a rotary encoder cooperating with a gearbox (16) of the main compactor (6).

13. Working group according to one of the claims 10 to 12, **characterised by** at least one sensor (11), by means of which a compression pressure applied to the main compactor (6) can be detected, with which the main compactor (6) presses the material (4) to be pressed.

14. Working group according to one of the claims 10 to 13, **characterised in that** the square baler (2) has a pre-channel (8) within which material (4) to be pressed can be pre-compressed by means of a pre-compactor (9) and transferred to the main channel (5), wherein at least one sensor (10) cooperates with the pre-compactor (9), by means of which information concerning a transfer of material (4) starting from the pre-channel (8) to the main channel (5) can be detected.

## Revendications

1. Procédé de fonctionnement d'une combinaison de travail agricole, la combinaison de travail incluant
- une machine de travail agricole (1) ainsi que
- une presse agricole à balles parallélépipédiques (2),
la presse à balles parallélépipédiques (2) étant accouplée à la machine de travail (1) et raccordée à une sortie d'entraînement auxiliaire (3) de la machine de travail (1), de sorte que la presse à balles parallélépipédiques (2) est tractable et entraînable par l'intermédiaire de la machine de travail (1),
incluant les étapes de procédé suivantes :
a) De la matière à presser (4) est ramassée sur le terrain et amenée au moins indirectement à un canal principal (5) d'un compacteur principal (6),
b) À l'intérieur du canal principal (5), la matière précompactée est saisie au moyen du compacteur principal (6) et pressée contre de la matière (4) se trouvant déjà dans le canal principal (5), le compacteur principal (6) étant transféré de manière oscillante entre une position reculée en retrait au maximum dans le canal principal (5) et une position de pressage avancée au maximum dans le canal principal (5),
**caractérisé par** les étapes de procédé suivantes :
c) À partir d'au moins un instant de fonctionnement de la combinaison de travail est déterminé au moins un instant de compactage (26), situé dans l'avenir, auquel le compacteur principal (6) se trouvera dans sa position de pressage,
d) une puissance de sortie de la machine de travail (1) est augmentée à un niveau de pointe (27) de façon que le niveau de pointe (27) soit présent à l'instant de compactage (26) au niveau du compacteur principal (6).

2. Procédé selon la revendication 1, **caractérisé en ce que** la puissance de sortie après l'instant de compactage (26) est réduite à un niveau de puissance abaissé par rapport au niveau de pointe (27) .

3. Procédé selon la revendication 1 ou 2, **caractérisé en ce que** la puissance de sortie est augmentée au niveau de pointe (27) de façon qu'elle soit présente au niveau du compacteur principal (6) au-delà d'un instant de pointe qui commence avant l'instant de compactage respectif (26) et prend fin après celui-ci.

4. Procédé selon une des revendications 1 à 3, **caractérisé en ce que**, compte tenu de l'instant de compactage (26) ainsi que d'une inertie d'élévation de la puissance de sortie jusqu'au niveau de pointe (27), est déterminé un instant de départ (32) auquel commence l'élévation d'un niveau de puissance d'un moteur à combustion interne (13) de la machine de travail (1).

5. Procédé selon une des revendications 1 à 4, **caractérisé en ce qu'**à la machine de travail (1) est fournie, à partir de la presse à balles parallélépipédiques (2), au moins une information au moyen de laquelle au moins un instant de compactage (26) est déterminé.

6. Procédé selon la revendication 5, **caractérisé en ce qu'**au moyen d'au moins un capteur (7) est détectée une position du compacteur principal (6) à l'intérieur du canal principal (5), sur la base de laquelle, compte tenu de la vitesse de rotation de la sortie d'entraînement auxiliaire (3) ainsi que d'un rapport de transmission entre la vitesse de rotation de la sortie d'entraînement auxiliaire (3) et un nombre de courses du compacteur principal (6), est déterminé au moins un instant de compactage (26).

7. Procédé selon la revendication 5 ou 6, **caractérisé par** au moins un capteur (14) au moyen duquel une position de référence du compacteur principal (6) à l'intérieur du canal principal (5) est détectée avant la mise en service de la sortie d'entraînement auxiliaire (3), au moins un instant de compactage (26) étant déterminé à partir de la position de référence du compacteur principal (6) compte tenu d'une vitesse de rotation de la sortie d'entraînement auxiliaire (3) et d'un rapport de transmission entre la vitesse de rotation de la sortie d'entraînement auxiliaire (3) et un nombre de courses du compacteur principal (6).

8. Procédé selon une des revendications 1 à 7, **caractérisé en ce que** de la matière (4) ramassée sur le terrain est d'abord envoyée à un précanal (8) à l'intérieur duquel la matière (4) est précompactée au moyen d'un précompacteur (9) avant d'être transférée, à partir du précompacteur (9), au canal principal (5), le précompacteur (9) coopérant avec au moins un capteur (10) au moyen duquel un instant de transfert auquel la matière précompactée (4) est transférée au canal principal (5) est détectable.

9. Procédé selon une des revendications 1 à 8, **caractérisé en ce qu'**au moyen d'au moins un capteur (11) est détectée une pression de compactage du compacteur principal (6), avec laquelle le compacteur principal (6) presse la matière à presser (4).

10. Combinaison de travail agricole incluant
- une machine de travail agricole (1) ainsi que
- une presse agricole à balles parallélépipédiques (2),
la presse à balles parallélépipédiques (2) étant accouplée à la machine de travail (1) et raccordée à une sortie d'entraînement auxiliaire (3) de la machine de travail (1), de sorte que la presse à balles parallélépipédiques (2) est tractable et entraînable par l'intermédiaire de la machine de travail (1),
la machine de travail (1) comportant au moins une commande (12) au moyen de laquelle un niveau de puissance d'un moteur à combustion interne (13) de la machine de travail (1) est commandable,
la presse à balles parallélépipédiques (2) comportant au moins un compacteur principal (6) qui, à l'intérieur d'un canal principal (4), est transférable de manière oscillante entre une position reculée en retrait au maximum dans le canal principal (5) et une position de pressage avancée au maximum dans le canal principal (5)
la presse à balles parallélépipédiques (2) comportant au moins un capteur (7, 14) au moyen duquel des informations relatives à une position du compacteur principal (5) à l'intérieur du canal principal (5) sont détectables,
le capteur (7, 14) et la commande (12) de la machine de travail (1) étant connectés l'un à l'autre au moins indirectement au moyen d'au moins une liaison de données,
**caractérisée en ce que**
le capteur (7, 14) et la commande (12) sont configurés pour réaliser les étapes de procédé selon la revendication 1.

11. Combinaison de travail selon la revendication 10, **caractérisée en ce qu'**au moins un capteur (7) est formé par un capteur de position coopérant avec un compacteur principal (6).

12. Combinaison de travail selon la revendication 10 ou 11, **caractérisée en ce qu'**au moins un capteur (14) est formé par un capteur rotatif qui coopère avec une transmission (16) du compacteur principal (6).

13. Combinaison de travail selon une des revendications 10 à 12, **caractérisée par** au moins un capteur (11) au moyen duquel est détectable une pression de compactage qui est présente au niveau du compacteur principal (6) et avec laquelle le compacteur principal (6) presse la matière à presser (4).

14. Combinaison de travail selon une des revendications 10 à 13, **caractérisée en ce que** la presse à balles parallélépipédiques (2) comporte un précanal (8) à l'intérieur duquel de la matière à presser (4) est précompactable au moyen d'un précompacteur (9) et transférable au canal principal (5), avec le précompacteur (9) coopérant au moins un capteur (10) au moyen duquel des informations relatives à un transfert de matière (4) à partir du précanal (8) vers le canal principal (5) sont détectables.
